## Europäisches Patentamt
## European Patent Office
## Office européen des brevets

(19)

(11) Veröffentlichungsnummer : **0 340 407 B1**

(12) **EUROPÄISCHE PATENTSCHRIFT**

(45) Veröffentlichungstag der Patentschrift :
29.07.92 Patentblatt 92/31

(51) Int. Cl.⁵ : **B29C 47/42**

(21) Anmeldenummer : **89103722.8**

(22) Anmeldetag : **03.03.89**

(54) **Planetwalzenextruder zum Aufbereiten und Strangpressen von plastischen Massen.**

(30) Priorität : **04.05.88 DE 3815061**

(43) Veröffentlichungstag der Anmeldung :
**08.11.89 Patentblatt 89/45**

(45) Bekanntmachung des Hinweises auf die
Patenterteilung :
**29.07.92 Patentblatt 92/31**

(84) Benannte Vertragsstaaten :
**DE FR GB IT SE**

(56) Entgegenhaltungen :
**EP-A- 0 220 839**

(56) Entgegenhaltungen :
**CH-A- 509 542**
**CH-A- 542 372**
**GB-A- 2 039 464**
**PATENT ABSTRACTS OF JAPAN, Band 10, Nr.
59 (M-459)[2116], 8. März 1986; & JP-A-60 205
011 (HITACHI SEISAKUSHO K.K.)16-10-1985**

(73) Patentinhaber : **HERMANN BERSTORFF
Maschinenbau GmbH
An der Breiten Wiese 3/5
W-3000 Hannover 61 (DE)**

(72) Erfinder : **Müller, Werner, Dipl.-Ing.
Skagenhof 3
W-3000 Hannover 91 (DE)**

EP 0 340 407 B1

## Beschreibung

Planetwalzenextruder werden erfolgreich zum Aufbereiten und zum Strangpressen von thermoplastischen Kunststoffmassen eingesetzt. Ein Anwendungsgebiet des Planetwalzenextruders liegt in dem Aufbereiten von PVC, Einspeisen in einen Walzenspalt eines Kalanders, Kalandrieren zu einer Folienbahn.

Der Planetwalzenextruder stellt ein planetenartiges Plastifizierteil dar, bei dem die Hauptspindel angetrieben wird und dadurch die mit ihr und mit der Innenverzahnung des umschließenden Gehäuses kämmenden Planetspindeln antreibt. Am ausstoßseitigen Ende des Planetwalzenextruders ist ein Anlaufring koaxial zur Hauptspindel angeordnet und deckt die Stirnseite der Planetspindeln zum Teil ab. Die Planetspindeln stützen sich am Anlaufring ab, der damit die Axialkräfte dieser Planetspindeln aufnimmt.

Durch die Axialkräfte der Planetspindeln auf dem Anlaufring entsteht durch die trockene Reibung eine große Bremswirkung, die ein hohes Drehmoment für die Zentralspindel erforderlich macht, die die Planetspindeln durch die gemeinsame Verzahnung mit antreibt.

Weiterhin ist es aufgrund der Bremswirkung der Planetspindeln gegen den Anlaufring erforderlich, die Zentralspindel und auch die Planetspindeln sowie den Anlaufring wesentlich stärker zu dimensionieren und einem speziellen Härtungsvorgang zu unterziehen, weil sonst ein überproportionaler Verschleiß durch die Zahnkräfte an beiden Bauteilen und an dem Anlaufring nicht zu vermeiden ist.

Es ist die Aufgabe der vorliegenden Erfindung einen Planetwalzenextruder aufzuzeigen, bei dem eine schwächere Konstruktion der Zentralspindeln und der Planetspindeln möglich ist, sowie eine Einsparung von Antriebsenergie des Extruderantriebes erreicht wird.

Insbesondere soll sichergestellt werden, daß der Extruder auch ohne eine spezielle Härtung der Planetspindeln und des Anlaufringes wenig Verschleiß an diesen Bauteilen aufweist.

Die Aufgabe wird durch die im kennzeichnenden Teil des Patentanspruch 1 niedergelegten Merkmale gelöst.

Durch die Ausbildung einer Ringnut in dem Anlaufring und dem bündigen Abschluß der Keramikkörper mit der Oberfläche des Anlaufringes bzw. den Stirnflächen der Planetspindeln wird eine sehr sichere Einbettung und Abstützung für den ringförmigen Keramikkörper geschaffen, gegen den die Planetspindeln sich mit einem relativ hohen Rückdruck bei ihrer Drehung durch die Zentralspindel abstützen.

Die Reibwerte zwischen den Planetspindelstirnflächen und dem Anlaufring werden im Vergleich zu gehärteten Metallspindeln und einem Anlaufring durch diese Maßnahme um mehr als 30 % gesenkt, so daß der Verschleiß an der Verzahnung der Planetspindeln selbst und der antreibenden Zentralspindel, insbesondere während der Anfahrphase erheblich gesenkt und Antriebsenergie eingespart wird. Kostspielige Härtungsvorgänge, besonders für die Planetspindeln, werden eingespart.

Eine weitere Verbesserung dieser Werte wird durch die Anordnung eines Keramikkörpers in eine Aussparung in den Stirnflächen der Planetspindeln erreicht. Durch diese Anordnung laufen die Keramikkörper in den Stirnflächen der Planetspindeln gegen den ringförmigen Keramikkörper in der Ringnut des Anlaufringes, so daß die Reibwerte nochmals um ca. 20 % gesenkt werden, im Vergleich zu den Reibwerten von zwei mit einem bestimmten Druck gegeneinander gepreßten Metallteilen, wobei ein Metallteil stationär ist (Anlaufring) und ein Metallteil rotiert (Planetspindel)

Der in die Ringnut oder in die Aussparung der Stirnflächen der Planetspindeln eingebettete Keramikkörper kann in vorteilhafter Weise je nach der Belastung durch die Zahnkräfte als Massivkeramikkörper, als Verbundkeramikkörper oder auch als verstärkter Keramikkörper ausgebildet sein, um unterschiedliche Materialien und Drehzahlen der Zentralspindel berücksichtigen zu können.

An Hand der Zeichnung wird ein Ausführungsbeispiel der Erfindung nachstehend näher erläutert.

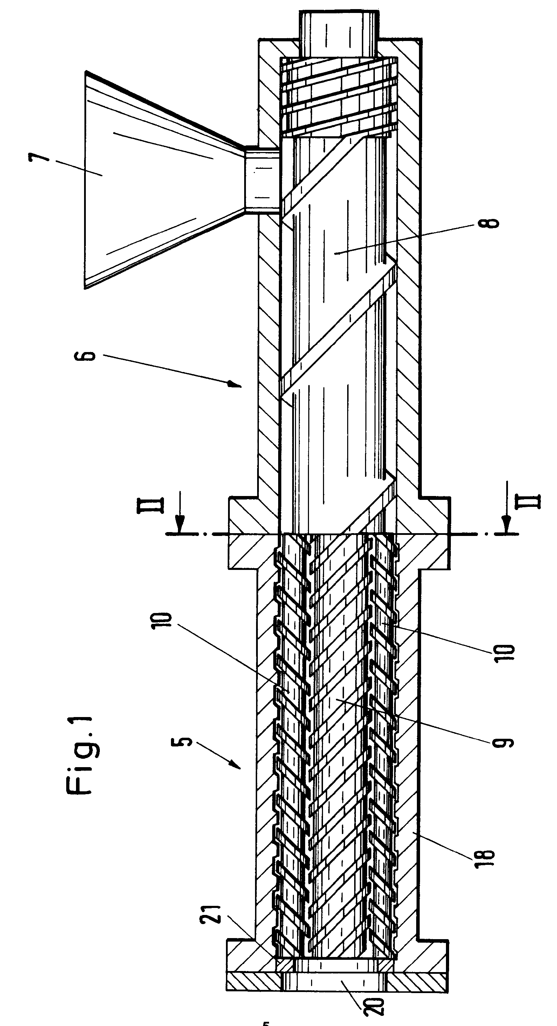

Fig. 1 zeigt einen Planetwalzenextruder in der Draufsicht im Längsschnitt

Fig. 2 zeigt einen Querschnitt des Planetwalzenextruders

Fig. 3 einen weiteren Querschnitt eines Details

Der Extruder besteht aus einem Füllschneckenteil 6 und einem planetenartig ausgebildeten Plastifizierteil 5. Über eine Einfüllöffnung 7 wird die zu plastifizierende Formmasse aufgegeben und von der in der Zylinderbohrung des Füllschneckenteiles sich drehenden, angetriebenen Füllschnecke 8 erfaßt. Die Füllschnecke 8 ist drehfest mit einer Hauptspindel 9 des planetenartigen Plastifizierteiles 5 verbunden. Die Hauptspindel 9 weist eine schräge Außenverzahnung auf, in die über den Umfang der Hauptspindel 9 verteilte Planetspindeln 10 eingreifen. Die Planetspindeln 10 kämmen andererseits in einer Innenverzahnung des Zylinderabschnittes 18 des planetenartigen Plastifizierteiles 5.

Am ausstoßseitigen Ende des Planetwalzenextruders 5 ist ein Anlaufring 21 koaxial zur Hauptspindel 9 angeordnet. Gegen diesen Anlaufring 21 stützen sich die Planetspindeln 10 ab. Der Anlaufring 21 deckt die Austrittsöffnung des Planetwalzenextruders zum Teil ab.

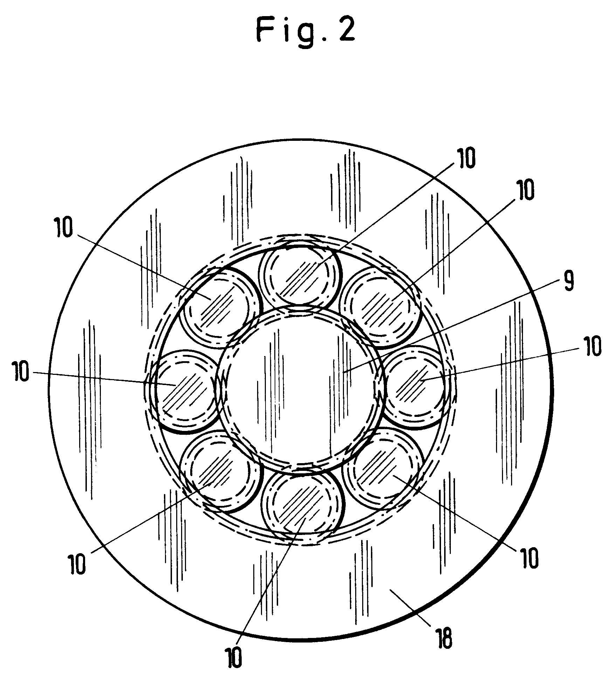

In dem in Fig. 2 gezeigten Querschnitt sind die Planetspindeln 10 und die Zentralspindel 9 zu erkennen,

EP 0 340 407 B1

die in dem Gehäuse 18 rotieren.

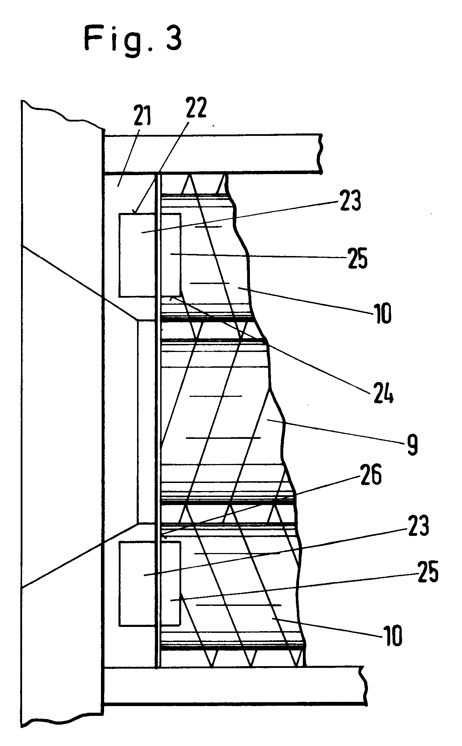

In Fig. 3 wird der Anlaufring 21 in vergrößerter Form dargestellt. In der Ringnut 22 ist ein ringförmiger Keramikkörper 23 angeordnet, gegen den ein, in der Aussparung 24 der Planetspindeln 10 angeordneter Keramikkörper 25 anläuft.

Durch die Drehung der Schnecke 8, in die die Zentralspindel 9 eingeschraubt ist, werden auch die Planetspindeln 10 in Drehbewegung gesetzt, weil die Schrägverzahnung der Zentralspindel 10 mit der Schrägverzahnung der Planetspindel 10 zusammenwirkt.

Die Planetspindeln 10 kämmen mit der Innenverzahnung des Zylinderabschnittes 18. Die Schrägverzahnung der Zentralspindel 9 und der Planetspindel 10 sowie des Zylinderabschnittes ist für eine Förderwirkung des zu plastifizierenden Materials in Richtung der Materialaustragsöffnung 20 erforderlich.

Auf der anderen Seite entsteht durch die Schrägverzahnung und die Drehung der Zentralspindel 9 eine axiale Kraft der Spindeln 10 in Richtung der Öffnung 20, die von dem Anlaufsring 21 aufgenommen werden muß.

Durch die Anordnung des ringförmigen Keramikkörpers 23 in der Ringnut 22 des Anlaufringes 21 wird die Reibung zwischen den Stirnflächen der Planetspindeln 10 und dem Keramikkörper erheblich verringert, so daß insbesondere der Verschleiß an den Planetspindeln 10 und der Zentralspindel wesentlich gesenkt wird, selbst wenn Materialien hoher Viskosität verarbeitet werden. Besondere Härtungsvorgänge für die Planetspindeln und die Zentralspindel sind entbehrlich.

Diese Wirkung wird noch gesteigert durch die Anordnung von Keramikkörpern 25 in Aussparungen 24 in den Stirnflächen der Planetspindeln 10. Vorteilhaft ist ebenfalls, daß durch die Anordnung des ringförmigen Keramikkörpers und der Keramikkörper in den Stirnflächen der Planetspindeln der Verschleiß des Anlaufringes vermieden wird. Der Verschleiß an den Planetspindeln wird darüber hinaus, insbesondere während der Anfahrphase, im Planetwalzenextruder 5 stark gesenkt.


## Patentansprüche

1. Planetwalzenextruder zum Aufbereiten und Strangpressen von plastischen Massen, insbesondere Kunststoff oder Kautschuk, mit einer Hauptspindel, die von Planetspindeln umgeben ist, die in der Außenverzahnung der Hauptspindel und der Innenverzahnung eines Gehäusezylinders kämmen und die sich mit ihren geraden Stirnflächen auf einem ausstoßseitigen Anlaufring abstützen, der koaxial zu der Hauptspindel angeordnet ist,
**dadurch gekennzeichnet,**
daß der metallische Anlaufring (21) eine Ringnut (22) aufweist,
daß in der Ringnut (22) ein Keramikkörper (23) angeordnet ist, und
daß der Keramikkörper (23) in Richtung der Planetspindeln bündig mit dem Anlaufring (21) abschließend ausgebildet ist und/oder
daß die an dem Anlaufring (21) laufenden Stirnflächen der Planetspindeln (10) eine Aussparung (24) aufweisen, daß in die Aussparung (24) ein Keramikkörper (25) angeordnet ist, und
daß der Keramikkörper bündig mit der Stirnfläche (26) der Planetspindel (10) abschließend ausgebildet ist.

2. Planetwalzenextruder nach Anspruch 1
**dadurch gekennzeichnet,**
daß die Ringnut (22) und der Keramikkörper (23) im Querschnitt rechteckig oder halbrund ausgebildet sind.

3. Planetwalzenextruder nach Anspruch 1 und 2 **dadurch gekennzeichnet,**
daß der ringförmige Keramikkörper (23, 25) als Massivkeramikkörper, als Verbundkeramikkörper oder als verstärkter Keramikkörper ausgebildet ist.


## Claims

1. A planetary gear extruder for compounding and extruding plastic materials, especially plastics or rubber, with a main spindle being surrounded by planetary spindles that mesh with the external gearing of the main spindle and the internal gearing of a barrel housing and the straight front faces of which are pressed against a stop ring arranged at the outlet coaxially to the main spindle,
**characterized in that**
the metal stop ring (21) is provided with an annular groove (22),
that a ceramic element (23) is arranged in the annular groove (22), and
that the ceramic element (23) towards the planetary spindles is flush with the stop ring (21), and/or that the front faces of the planetary spindles (10) running against the stop ring (21) are provided with a recess (24), that a ceramic element (25) is arranged in the recess (24), and that the ceramic element is flush with the front face (26) of the planetary spindle (10).

2. Planetary gear extruder according to claim 1
**characterized in that**
the annular groove (22) and the ceramic element (23) present a rectangular or semicircular cross section.

3. Planetary gear extruder according to claims 1 and 2
**characterized in that**
the annular ceramic element (23, 25) is designed as a solid, composite or reinforced ceramic element.

**Revendications**

1. Extrudeuse à planétaires pour la transformation et l'extrusion de masses plastiques, s'agissant en particulier de matières plastiques ou caoutchouc, avec une broche principale entourée de broches planétaires qui s'engrènent dans la denture extérieure de la broche principale et dans la denture intérieure d'un cylindre en forme de boîtier et qui s'appuient, par leurs surfaces frontales planes, sur une bague de butée placée côté sortie qui est positionnée coaxialement à la broche principale,
**caractérisée en ce que**
la bague de butée métallique (21) est munie d'une rainure annulaire (22),
un corps céramique (23) est placé dans la rainure annulaire (22), et
en ce que le corps céramique (23) est conçu à fleur de la bague de butée (21) en direction des broches planétaires et/ou
en ce que les surfaces frontales des broches planétaires (10) tournant contre la bague de butée (21) sont munies d'un évidement (24),
un corps céramique (25) est placé dans l'évidement (24), et
en ce que le corps céramique est conçu à fleur de la surface frontale (26) de la broche planétaire (10).

2. Extrudeuse à planétaires selon la revendication 1,
**caractérisée en ce que**
la rainure annulaire (22) et le corps céramique (23) présentent une section transversale rectangulaire ou demi-circulaire.

3. Extrudeuse à planétaires selon les revendications 1 et 2,
**caracterisée en ce que**
le corps céramique annulaire (23, 25) est formé en corps céramique massif, en corps céramique composite ou en corps céramique renforcé.

Fig.1

# Fig. 2

# Fig. 3